# EUROPÄISCHE PATENTSCHRIFT

(11) **EP 0 878 633 B1**
(45) Veröffentlichungstag und Bekanntmachung des Hinweises auf die Patenterteilung: **08.12.2004**
(21) Anmeldenummer: 98108045.0
(22) Anmeldetag: 02.05.1998
(51) Int. Cl.: F16D 3/62, F16D 3/78

(54) **Wellengelenk**
Shaft coupling
Accouplement d'arbres

(30) Priorität: 17.05.1997 DE 19720857; 27.06.1997 DE 19727321
(43) Veröffentlichungstag der Anmeldung: 18.11.1998
(73) Patentinhaber: DaimlerChrysler AG, 70567 Stuttgart (DE)
(72) Erfinder: Albers, Hartmut, 70178 Stuttgart (DE)

(56) Entgegenhaltungen:
- DE-C- 408 277
- DE-U- 29 708 814
- US-A- 4 118 952

## Beschreibung

Die Erfindung geht aus von einem Wellengelenk nach dem Oberbegriff von Anspruch 1, wie es beispielsweise aus der DE 43 04 274 C1 als bekannt hervorgeht.

Derartige Wellengelenke werden beim Einsatz in Fahrzeugen nicht nur mechanisch sehr stark durch durch Drehmomentspitzen und durch spannungsüberhöhende Gelenkbewegungen belastet, sondern es tritt durch Wärmeleitung und durch Wärmeabstrahlung in der Nähe befindlicher, z.T. sehr heißer Teile auch eine thermische Belastung des Wellengelenkes auf. Durch die Bauteilerwärmung wird bei Kunststoffteilen die Belastbarkeit der eingesetzten Werkstoffe herabgesetzt, so daß auch die thermische Belastung der Wellengelenke für deren mechanische Belastbarkeit relevant ist.

Viele bekannte Wellengelenke, wie sie insbesondere für Leichtbaukonstruktionen von Gelenkwellen vorgesehen sind, weisen an den Enden der beiden durch das Gelenk verbundenen Wellen jeweils Flansche mit drei in Richtung zum Wellengelenk hin axial abragenden Mitnahmezapfen auf, wobei die insgesamt sechs, gegenseitig auf Lücke angeordneten Mitnahmezapfen gleichmäßig am Umfang eines gemeinsamen Teilkreises angeordnet sind. Die Mitnahmezapfen sind durch einen flexiblen, sechseckigen, in den Eckpunkten mit Steckhülsen versehenen Gelenkring untereinander drehstarr verbunden. Der Gelenkring ist zwischen den Steckhülsen in sich axial elastische verformbar, so daß die beiden über den Gelenkring verbundenen Flansche - begrenzte - Winkelbewegungen in jeder beliebigen Richtung, auch während der Drehung ausführen können. Durch diese Winkelbewegung wird der Gelenkring axial gewellt, wodurch im Rahmen der Elastizität entsprechend des Hook'schen Gesetzes Biegespannungen entstehen, die sich den drehmomentbedingten Betriebsbeanspruchungen überlagern. Durch diese Überlagerung von Beanspruchungen kann die Werkstoff-Festigkeit erreicht werden. Demgemäß können aus Gründen der Dauerfestigkeit der Wellengelenke nur beschränkte Beugewinkel zugelassen werden.

Die Anzahl von drei Mitnahmezapfen je Flansch, also insgesamt sechs Mitnahmezapfen im Wellengelenk ist nicht zwingend erforderlich. Es sind auch nur zwei Zapfen je Flansch, also insgesamt vier Mitnahmezapfen denkbar, wobei jedoch aufgrund der Verteilung der Umfangsbelastung auf diese geringe Zahl von Mitnahmeelementen diese stärker beansprucht sind als bei einer höheren Anzahl von Mitnehmern. Auch vier oder mehr Zapfen je Flansch, also insgesamt acht oder mehr Mitnahmezapfen im Wellengelenk sind möglich, wobei mit zunehmender Anzahl von Mitnahmezapfen der erforderliche Gelenkdurchmesser größer und/oder der tolerierbare Beugewinkel kleiner wird. Deshalb ist als am häufigsten anzutreffender Kompromiß zwischen Einzelteilbelastung einerseits und Gelenkgröße andererseits die angesprochene Anzahl von drei bzw. sechs Mitnahmezapfen anzutreffen.

Die DE 41 40 311 A1 zeigt einen sechseckigen Gelenkring aus Faserverbundmaterial in Form einer Ringscheibe, bei dem in den verstärkten Eckbereichen axiale Steckhülsen eingelassen sind. Die geradlinigen Bereiche zwischen zwei benachbarten Ecken sind durch einen relativ dünnen, in der Ebene der Ringscheibe sich erstreckenden Steg aus mehreren zusammenhängenden Lagen von ausgehärtetem Faserverbundmaterial gebildet. Dieser Steg ist in Radialrichtung relativ breit. Beim Beugen des Wellengelenkes werden diese Stege nicht nur gebogen sondern auch verdrillt. Zwar lassen sich die dünnen Stege bei relativ geringen Biegespannungen elastisch verbiegen, jedoch treten wegen der von einer Rotationssymmetrie stark abweichenden Form der Stege beim Verdrillen derselben vor allem an ihrem inneren und äußeren Rand hohe Spannungen auf.

Die eingangs genannte DE 43 04 274 C1 zeigt einen sechseckigen Gelenkring, bei dem die in den Eckbereichen angeordneten Steckhülsen paarweise jeweils durch in sich endlose, ovale Mitnahmeschlingen miteinander verbunden sind, die um zwei benachbarte Steckhülsen außenseitig herumgeschlungen sind. Und zwar sind abwechselnd breite, mittig liegende Mitnahmeschlingen und ein Paar randseitig liegende schmalere Mitnahmeschlingen im Gelenkring angeordnet. Die breite Mitnahmeschlinge ist etwa dreimal so breit wie ihre radiale Wandstärke mißt; die beiden schmalen Mitnahmeschlingen sind gemeinsam etwa ebenso breit wie die mittig liegende Mitnahmeschlinge. Die Mitnahmeschlingen sind auf den Steckhülsen radial verschwenkbar, so daß der Gelenkring als Einzelteil in seiner Form gelenkig veränderbar ist. Zum Zusammenhalten aller Teile des Gelenkringes und zur Verhinderung von Schmutzzutritt sind die Teile des Gelenkringes in eine gummielastische Masse geringer Härte eingebettet und vollständig umschlossen. Aufgrund der in Relation zur axial gemessenen Breite der Mitnahmeschlingen relativ geringen radialen Wandstärke bieten sie gute Voraussetzungen für eine Aufnahme des Umfangszuges bei geringen Spannungsüberhöhungen in den Krümmungen der Mitnahmeschlingen. Allerdings werden beim Beugen dieses Wellengelenkes die Mitnahmeschlingen in Axialrichtung verkantet oder gekippt und außerdem verdrillt, wobei an unterschiedlichen Stellen der Mitnahmeschlingen starke Spannungsüberhöhungen auftreten. Beim Verkanten kommt es zu einer einseitigen Kantenauflage der Schlingenkrümmung auf der Steckhülse und dementsprechend dort zu einer Spannungskonzentration. Beim Verdrillen der relativ breiten Mitnahmeschlingen treten - ähnlich wie bei den Stegen der zuvor geschilderten Gelenkscheibe nach der DE 41 40 311 A1 - an den Rändern Spannungsüberhöhungen wenn auch auf geringerem Niveau als dort auf. Es treten also im Betrieb selbst bei mäßiger Drehmomentbelastung zumindest bei spürbaren Abwinklungen des Wellengelenkes lokal hohe Spannungen in den Mitnahmeschlingen auf, die die dauerhaft tolerierbare Nennbelastung des Wellengelenkes herabsetzen.

Aufgabe der Erfindung ist es, das gattungsgemäß zugrundegelegte Wellengelenk dahingehend zu verbessern, daß höhere, dauerhaft zulässige Drehmomentbelastungen und/oder Beugewinkel zugelassen werden können.

Diese Aufgabe wird - ausgehend von dem gattungsgemäß zugrundegelegten Wellengelenk - erfindungsgemäß durch die kennzeichnenden Merkmale von Anspruch 1 gelöst. Aufgrund der Druckstäbe im Inneren der Mitnahmeschlingen tragen in jeder Beanspruchungsrichtung insgesamt doppelt soviele Kraftübertragungselemente wie Mitnahmeschlingen für jeweils eine Drehrichtung vorgesehen sind oder - anders ausgedrückt - es tragen ebenso viele Kraftübertragungselemente wie Mitnahmezapfen im Gelenk enthalten sind. Und zwar trägt in jeder Beanspruchungsrichtung nach wie vor jede zweite Mitnahmeschlinge, zusätzlich tragen aber noch die dazwischen liegenden, in den unbelasteten Mitnahmeschlingen angeordneten Druckstäbe. Aufgrund einer Verdoppelung der Kraftübertragungselemente kann gegenüber dem Stand der Technik eine deutlich höhere Nennlast des Wellengelenkes dauerhaft zugelassen werden.

Zweckmäßige Ausgestaltungen der Erfindung können den Unteransprüchen entnommen werden; im übrigen ist die Erfindung anhand eines in der Zeichnung dargestellten Ausführungsbeispieles nachfolgend noch erläutert; dabei zeigen:
- Fig. 1: eine seitliche Schnitt-Ansicht durch bzw. auf ein Wellengelenk,
- Fig. 2: eine vergrößerte Einzeldarstellung der Einzelheit II aus Figur 1,
- Fig. 3: eine axiale Ansicht auf den Wellenflansch der in Figur 1 links dargestellten Welle gemäß einem Schnitt entlang der Linie III-III,
- Fig. 4: eine nochmals vergrößerte Einzeldarstellung einer Mitnahmeschlinge des Wellengelenkes nach Figur 1 in axialer Ansicht im Einbauzustand einschließlich eingefügtem Druckstab,
- Fig. 5: eine Einzeldarstellung eines Druckstabes aus Figur 4 gemäß dortiger Schnittlinie V-V,
- Fig. 6: eine vergrößerte Einzeldarstellung ähnlich der Darstellung gemäß Figur 2, jedoch von einem modifizierten Wellengelenk mit kugelflächenförmigem Umfangswulst auf der Steckhülse,
- Fig. 7: eine vergrößerte, perspektivische Einzeldarstellung eines Gleitelementes mit integriertem Gleitschuh für einen Druckstab aus dem Wellengelenk nach Figur 6,
- Fig. 8: eine Modifikation des Gleitelementes nach Figur 7, wobei das Gleitelement für die Mitnahmeschlinge und der Gleitschuh für den Druckstab baulich voneinander getrennt sind und
- Fig. 9: eine ähnliche Schnittdarstellung wie Figur 4, jedoch von dem Wellengelenk nach Figur 6 in axialer Ansicht im Einbauzustand einschließlich eingefügtem Druckstab.

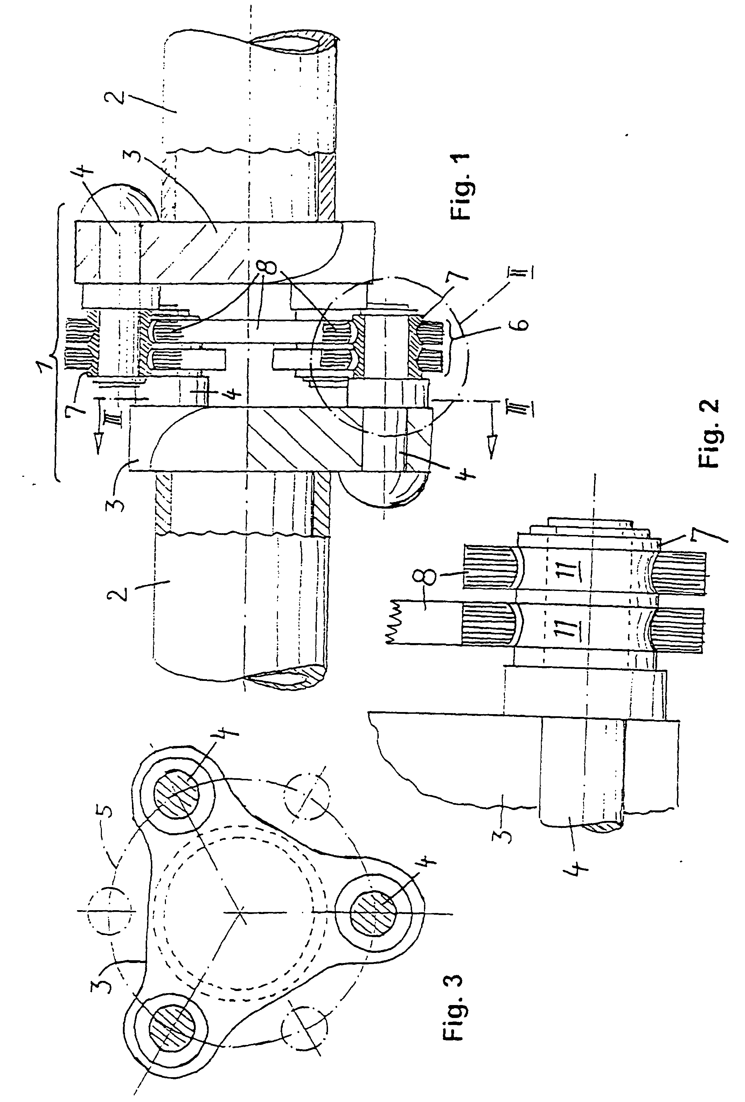

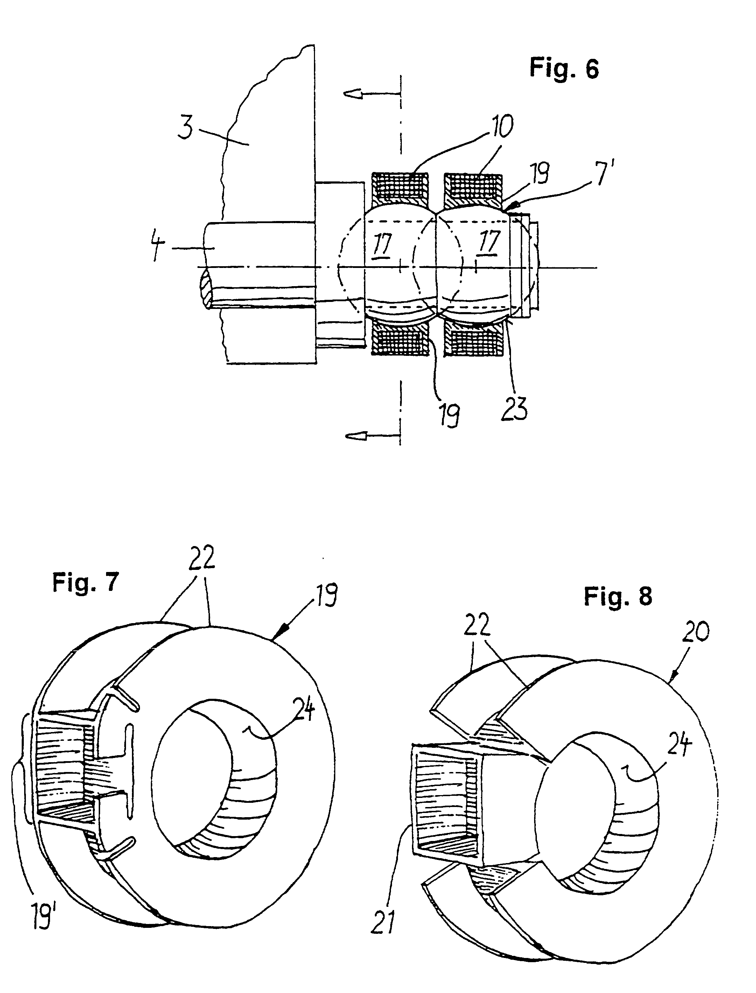

Es Sei zunächst auf die Gemeinsamkeit der beiden Ausführungsbeispiele nach den Figuren 1 bis 5 zum einen bzw. den Figuren 6 bis 9 zum anderen eingegangen. Beide Ausführungsbeispiele bauen auf der Darstellung nach Figur 1 auf. Darin ist ein Wellengelenk 1 gezeigt, mit dem zwei Wellen 2 drehsteif aber innerhalb gewisser Grenzen axial und/oder winkelbeweglich miteinander verbunden werden können. An den Enden der beiden durch das Gelenk verbundenen Wellen ist jeweils ein Flansch 3 angeordnet, von denen jeder beim dargestellten Ausführungsbeispiel jeweils drei in Richtung zum Wellengelenk hin axial abragende Mitnahmezapfen 4 trägt, wobei die insgesamt sechs Mitnahmezapfen, die wechselseitig auf Lücke angeordnet sind, gleichmäßig am Umfang eines gemeinsamen Teilkreises 5 angeordnet sind. Die Flansche 3 sind - wie Figur 3 deutlicher zeigt - in dem zwischen den Mitnahmezapfen liegenden Umfangsbereichen ausgespart, also im Prinzip sternförmig ausgebildet. Aufgrund dieser Sternform der gegenüberliegenden Flansche mit gegenseitig auf Lücke angeordneten Armen können diese bei Winkelbewegungen ineinander eintauchen, wodurch eine größere Winkelbeweglichkeit des Wellengelenkes gegeben ist. Die Mitnahmezapfen 4 an den Enden der Flanscharme sind wechselweise durch einen flexiblen, regelmäßig polygonartigen, vorzugsweise sechseckigen Gelenkring 6 untereinander drehstarr verbunden, der in den Eckpunkten mit Steckhülsen 7, 7' versehen ist. Die zwischen den Steckhülsen liegenden Schenkel des Gelenkringes sind in sich axial elastisch verformbar und verdrillbar. Der Gelenkring seinerseits ist mehrteilig ausgebildet und durch einen Kranz mehrerer, jeweils zwei benachbarte Steckhülsen 7 und 7 bzw. 7' und 7' umschlingender, in sich endloser, ovaler Mitnahmeschlingen 8, 10, 10' nach Art einzelner Kettenglieder zusammengesetzt, die auf den Steckhülsen jeweils radial verschwenkbar sind, so daß der Gelenkring 6 in seiner Form gelenkig veränderbar ist. Allerdings werden durch die axiale Verbiegung und Verdrillung der einzelnen Mitnahmeschlingen diese zu den drehmomentbedingten Zugbelastungen zusätzlich durch axiales Verkanten und durch Verdrillen belastet, wodurch die vom Wellengelenke tolerierbare Gesamtbelastung entsprechend niedriger angesetzt werden muß.

Um das Wellengelenk während der Rotation ohne weiteres relativ stark abwinkeln zu können, sind bei den dargestellten Ausführungsbeispielen die Mitnahmeschlingen 8, 10 axial schwenkbar auf den Steckhülsen 7, 7' gelagert. Zu diesem Zweck sind die ovalen Mitnahmeschlingen mittelbar oder unmittelbar auf den Mitnahmezapfen 4 aufgrund eines Paares von im Meridianschnitt runden Berührungsflächen an der Steckhülse bzw. an der Mitnahmeschlinge gelagert. Bei dem in den Figuren 1 bis 5 dargestellten Ausführungsbeispiel ist auf der Außenseite der Steckhülsen jeweils eine im Querschnitt kreisbogenförmig gestaltete Umfangsrille 11 angebracht, in die innenseitig verrundete Mitnahmeschlingen 8 eingreifen. Dadurch sind die Mitnahmeschlingen 8 in der jeweils zugehörigen Umfangsrille 11 unter axialer Gleitbewegung des Schlingenquerschnittes axial verschwenkbar. Beim Ausführungsbeispiel nach den Figuren 6 bis 9 ist ein Umfangswulst 17 in Kugelform 23 auf der Steckhülse 7' vorgesehen, auf dem die im Querschnitt flach gestalteten Mitnahmeschlingen 10, 10' über ein innenseitig hohlkugelförmiges (24) Gleitelement 19 bzw. 20 mittelbar gelagert sind.

Sowohl die Mitnahmeschlingen 8, 10 als auch die noch näher zu beschreibenden Druckstäbe 15, 15' sind zweckmäßigerweise aus langfaser-verstärktem Kunststoff gebildet, wobei die Langfasern alle parallel zueinander und zum Verlauf des tragenden Querschnittes liegen und unterbrechungsfrei durchlaufen. Die Mitnahmeschlingen 8, 10, 10' und die Druckstäbe 15, 15' führen während des Rotierens des Wellengelenkes in abgewinkeltem Zustand bei jeder Umdrehung eine vollständige Pendelbewegung in axialer Richtung aus, wobei die kreisbogenförmig konturierten Kontaktflächen axial aufeinander gleiten. Um bei dieser Gleitbewegung einen Verschleiß möglichst zu vermeiden, sind in den Faserwerkstoff und/oder den Matrix-Kunststoff der Mitnahmeschlingen 8, 10 und der Druckstäbe 15 Partikel eines Festschmierstoffes eingemischt.

Nicht nur die Mitnahmeschlingen 8 bzw. 10, 10' und die Druckstäube 15, 15' unterliegen einer tribologischen Beanspruchung, sondern auch die Steckhülsen 7, 7'. Um auch bei ihnen einen Verschleiß zu minimieren, werden sie aus einem reibungsarmen und verschleißbeständigen Werkstoff, vorzugsweise aus einer Keramik hergestellt. Dabei kann es von Vorteil sein, wenn in den Keramikwerkstoff der Steckhülse Partikel eines Festschmierstoffes eingemischt sind.

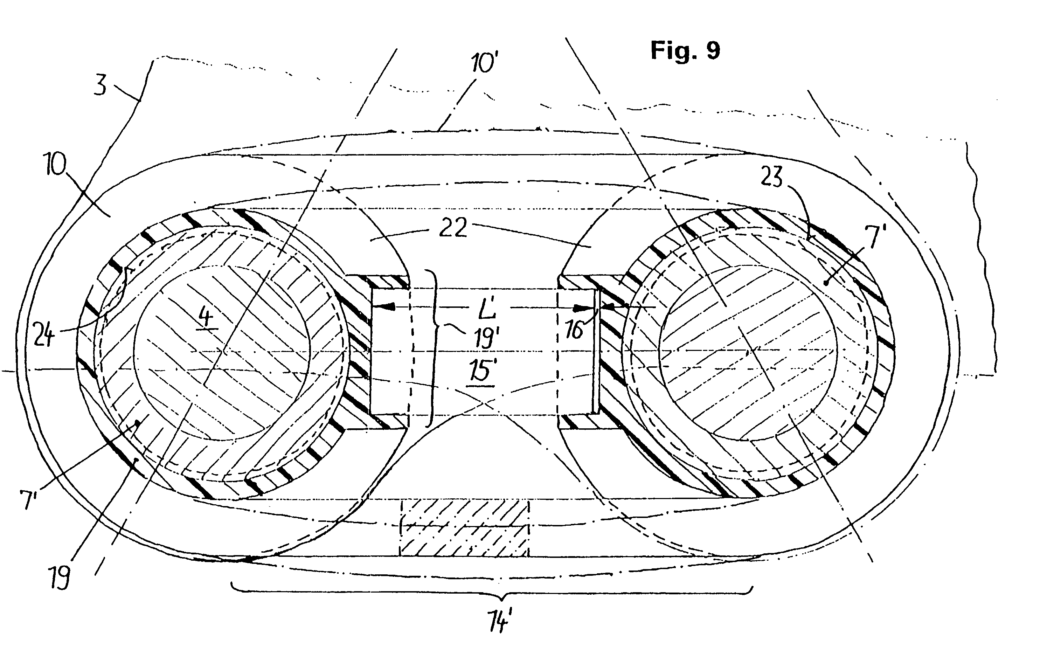

Um die Mitnahmeschlingen im Hinblick auf eine stoßartige Belastung zu optimieren, ist es gemäß der strichpunktierten Darstellung in Figur 9 zweckmäßig, die Flachseiten 14' des Ovals der Mitnahmeschlinge 10' gekrümmt auszubilden. Dadurch können sich die gekrümmten Flachseiten bei stoßartiger Zugbelastung der Mitnahmeschlinge elastisch in Richtung geradlinig strecken und zeitlich die Spannungsspitze abbauen. An sich wäre es auch denkbar, die Flachseiten ins innere des Ovals hinein zu wölben, was diese Wirkung ebenfalls hervorbrächte. Aus Gründen einer besseren Herstellbarkeit der Mitnahmeschlingen aus einem endlos-faserverstärktem Kunststoff im Wege der Wickeltechnik ist es jedoch zweckmäßiger, wenn die gekrümmten Flachseiten 14' des Ovals nach außen konvex gekrümmt sind. Selbstverständlich ist die ovale Formgebung ohne weiteres auch beim Ausführungsbeispiel nach den Figuren 1 bis 5 realisierbar.

Obwohl insgesamt sechs Mitnahmeschlingen 8 in dem Wellengelenk angebracht sind, trägt in jeder Drehrichtung jeweils nur die halbe Anzahl von Mitnahmeschlingen zur Drehmomentübertragung bei. Um eine Entlastung der Mitnahmeschlingen zu bewirken, ist erfindungsgemäß im Inneren einer jeden Mitnahmeschlinge 8 bzw. 10, 10' zusätzlich noch je ein geradliniger Druckstab 15 bzw. 15' angebracht. Beim Ausführungsbeispiel nach den Figuren 1 bis 5 greift der Druckstab 15 mit seinen Stirnseiten ebenfalls in die Umfangsrille 11 der Steckhülsen 7 kraftübertragend ein. Zu diesem Zweck ist der Druckstab 15 an seinen beiden Stirnseiten mit einer Sattelfläche versehen, die sowohl bezüglich des Querschnittes als auch bezüglich des Umfangsverlaufes der Umfangsrille der Steckhülsen angepaßt ist. Der Druckstab greift mit seinen beiden Enden in die Umfangsrille 11 je einer angrenzenden Steckhülse 7 ein. Dadurch sind die Druckstäbe in Axialrichtung unmittelbar formschlüssig auf den Steckhülsen gegen Wegrutschen gesichert. Bei Drehmomentbelastung des Wellengelenkes in einer bestimmten Drehrichtung nehmen jede zweite Mitnahmeschlinge und die drei im Inneren der unbelasteten Mitnahmeschlingen angeordneten Druckstäbe 15 an der Drehmomentübertragung teil. Durch diese Verteilung der Last auf eine doppelt so hohe Anzahl von Kraftübertragungselementen wie im Stand der Technik kommt es zu einer deutlichen Entlastung der Kraftübertragungselemente im Wellengelenk.

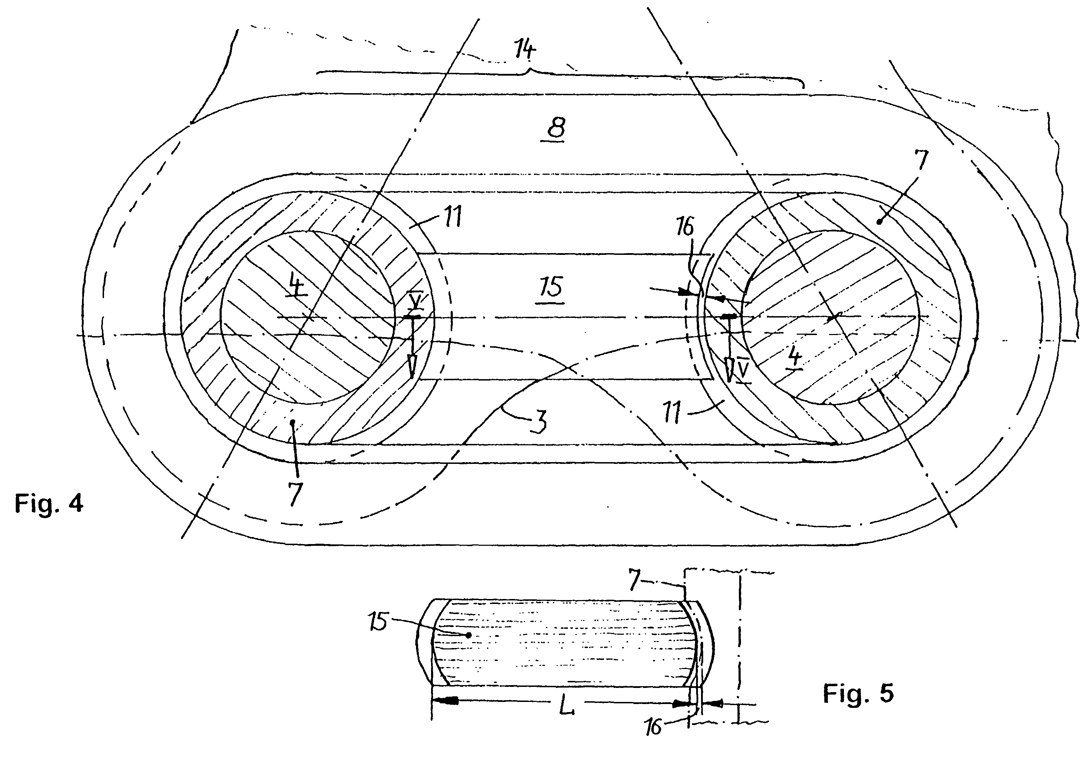

Unter normalen Lastbedingungen des Wellengelenkes sind die drei Mitnahmeschlingen einer Drehrichtung ohne weiteres alleine in der Lage, das auftretende Drehmoment zu Übertragen, so daß im Normalfall die Druckstäbe nicht belastet zu werden brauchen. Es ist aus Gründen einer statischen Unbestimmtheit im übrigen nicht möglich, ein Drehmoment auf sechs Kraftübertragungselemente eines Kreises gleichmäßig zu verteilen, sondern nur auf drei Elemente. Es ist deshalb zweckmäßig, die Länge L der Druckstäbe 15 so zu bemessen, daß sie den Lichtraum zwischen zwei benachbarten Steckhülsen 7 nur mit Spiel 16 (Figur 4) ausfüllen. Dadurch kommen die Druckstäbe erst nach einer belastungsbedingten elastischen Längung der Mitnahmeschlingen zum Tragen und nehmen erst dann ebenfalls Last auf. Demgemäß ist das Spiel 16 der Druckstäbe zwischen zwei benachbarten Steckhülsen so groß bemessen, wie die lastbedingte Längung der Mitnahmeschlingen unter einer zwar sehr hohen aber auf Dauer tolerierbaren Zugbeanspruchung. Erst wenn die Drehmomentbelastung zu einer höheren Zugbeanspruchung der Mitnahmeschlingen führen und diese noch mehr dehnen würde, legen sich auch die Stirnenden der Druckstäbe kraftübertragend in den Grund der Umfangsrillen 11 der Steckhülsen an. Die mit konvexen Flachseiten 14' ausgebildeten elastische Mitnahmeschlinge 10' dehnt sich natürlich unter Last mehr als die mit geradlinigen Flachseiten, so daß das Spiel bei den elastischen Mitnahmeschlingen 10' größer gestaltet werden müßte, als bei denen mit geradlinigen Flachseiten.

Nachfolgend sei noch auf das andere Ausführungsbeispiel nach den Figuren 6 bis 9 eingegangen, bei dem eine im Querschnitt - von innen gesehen - konkav gestaltete kreisbogenförmige Kontaktfläche 24 an einem Gleitelement 19 bzw. 20 vorgesehen ist, wogegen auf der Steckhülse 7' ein konvexer Umfangswulst 17 angebracht ist. Bei dem Ausführungsbeispiel nach den Figuren 6 bis 9 ist die Mitnahmeschlinge mittelbar unter Zwischenschaltung von Gleitelementen 19 bzw. 20 auf der Steckhülse gelagert, was den Vorteil hat, daß der Werkstoff der Gleitelemente nach tribologischen Gesichtspunkten optimal ausgewählt bzw. festgelegt werden kann.

Bei Verwendung von kugelförmigen Kontaktflächen 23/24 zwischen Steckhülse 7' und Gleitelement bzw. Mitnahmeschlinge ist es wegen der flacheren Wölbung der Kugeloberfläche schwieriger, einen Druckstab 15' auf der Kugeloberfläche lagesicher zu zentrieren, insbesondere dann, wenn - wie zu empfehlen - der Druckstab mit Spiel zwischen den Mitnahmezapfen gehalten ist. Deshalb ist es zumindest bei nach außen konvexen, insbesondere kugelförmigen Kontaktflächen zweckmäßig, die Druckstäbe mittelbar unter Verwendung von Gleitschuhen 19' bzw. 21 aus einem gleitfähigen Werkstoff, insbesondere aus Kunststoff auf die Umfangswülste 17 aufzusetzen. Die Druckstäbe 15' sind an den Stirnseiten gradlinig und rechtwinklig auf definierte Länge L' beschnitten und mit ihren Enden in die Gleitschuhe 19', 21 eingesteckt. Die Gleitschuhe bilden gemeinsam mit den Druckstäben die Funktionslänge der Druckstäbe.

Beim Ausführungsbeispiel des Gleitelementes 19 nach Figur 7 ist der Gleitschuh 19' für den Druckstab 15' in das Gleitelement 19 baulich zu einem ringförmig geschlossenen Bauteil integriert. Die Mitnahmeschlinge 10 wird zunächst außen auf die beiden Gleitelemente jeweils zwischen die Führungsborde 22 aufgelegt, womit der gegenseitige Abstand der beiden gegenüberliegenden Gleitelemente festgelegt ist. Die Gleitelemente sind zweckmäßigerweise zuvor auf die kugelförmigen Umfangswulste 17 der Steckhülsen 7' axial aufgeklipst worden. Um die Enden des Druckstabes 15' auch dann noch in die Gleitschuhe einbringen zu können, ist eine axial freiliegende Wandung des Gleitschuhes geschlitzt ausgebildet, so daß unter elastischem Aufbiegen dieser Wandung das Druckstabende axial in den Gleitschuh eingebracht werden kann.

Bei der Ausgestaltung des Gleitelementes 20 nach Figur 8 ist dieses C-förmig, d.h. an einer Unfangsstelle offen ausgebildet und der Gleitschuh 21 für den Druckstab 15' ist als ein demgegenüber gesondertes Bauteil gestaltet. Die Mitnahmeschlinge mit den beiden zugehörigen Gleitelementen 20 und Steckhülsen 7' einerseits und der Druckstab 15' mit den beiden Gleitschuhen 21 andererseits können jeweils für sich vormontiert und die zuletzt genannte Vormontage-Einheiten dann axial zwischen die Umfangswulste 17 der Steckhülse eingeschoben werden, wobei das beabsichtigte, weiter oben erwähnte Spiel 16 diesen Einklipsvorgang begünstigt.

Zum Schutz der Gleitstellen vor Schmutzzutritt und zum Zusammenhalten der Einzelteile des Gelenkringes 6 zu einem in sich geschlossenen und handhabbaren Werkstück sind alle Teile des Gelenkringes in eine gummielastische Masse geringer Härte eingebettet und von ihr vollständig umschlossen.

## Patentansprüche

1. Wellengelenk zum drehsteifen aber innerhalb gewisser Grenzen axial und/oder winkelbeweglichen Verbinden zweier Wellen (2) miteinander,
- mit an den Enden der beiden durch das Gelenk verbundenen Wellen (2) jeweils angeordneten Flanschen (3) mit mehreren, vorzugsweise drei, in Richtung zum Wellengelenk hin axial abragenden Mitnahmezapfen (4), wobei die insgesamt vorgesehenen, vorzugsweise sechs, gegenseitig auf Lücke angeordneten Mitnahmezapfen (4) gleichmäßig am Umfang eines gemeinsamen Teilkreises (5) angeordnet sind,
- mit einem die Mitnahmezapfen (4) untereinander drehstarr verbindenden flexiblen, regelmäßig polygonartigen, vorzugsweise sechseckigen, in den Eckpunkten mit Steckhülsen (7,7') versehenen Gelenkring (6), der zwischen den Steckhülsen (7,7') in sich axial elastisch verformbar ist,
- wobei der Gelenkring (6) seinerseits mehrteilig durch einen Kranz mehrerer, jeweils zwei benachbarte Steckhülsen (7,7') umschlingender, in sich endloser, ovaler Mitnahmeschlingen (8) gebildet ist, die auf den Steckhülsen (7,7') jeweils radial verschwenkbar sind, so dass der Gelenkring (6) in seiner Form gelenkig veränderbar ist,
**dadurch gekennzeichnet,**
**dass** im Inneren der ovalen Mitnahmeschlinge (8) jeweils ein geradliniger Druckstab (15) angebracht ist, der an seinen beiden Stirnenden zumindest mittelbar mit einer an die Steckhülsen (7,7') angepassten Stützfläche versehen ist.

2. Wellengelenk nach Anspruch 1,
**dadurch gekennzeichnet,**
**daß** die Druckstäbe (15, 15') nicht nur in Umfangsrichtung, sondern auch in Axialrichtung zumindest mittelbar formschlüssig auf den Steckhülsen (7, 7') zentriert, d.h. gegen axiales und peripheres Wegrutschen trotz relativer Gleitbewegung in beiden Richtungen gesichert sind.

3. Wellengelenk nach Anspruch 1,
**dadurch gekennzeichnet,**
**daß** an den gradlinig und rechtwinklig auf definierte Länge beschnittenen Enden der Druckstäbe (15') Gleitschuhe (19', 21) aus einem gleitfähigen Werkstoff, insbesondere aus Kunststoff aufgesteckt sind, die gemeinsam die Funktionslänge der Druckstäbe (15') bilden.

4. Wellengelenk nach Anspruch 1,
**dadurch gekennzeichnet,**
**daß** die Druckstäbe (15) aus langfaser-verstärktem Kunststoff gebildet sind, wobei die Langfasern alle parallel zueinander und zur Längsachse der Druckstäbe (15) liegen und unterbrechungsfrei durchlaufen.

5. Wellengelenk nach Anspruch 1,
**dadurch gekennzeichnet,**
**daß** in den Werkstoff der Druckstäbe (15), insbesondere in deren Faserwerkstoff und/oder den Matrix-Kunststoff oder in den Werkstoff der Gleitschuhe Partikel eines Festschmierstoffes eingemischt sind.

6. Wellengelenk nach Anspruch 1,
**dadurch gekennzeichnet,**
**daß** die wirksame Länge (L) der Druckstäbe (15) alleine oder - im Falle von endseitig aufgesteckten Gleitschuhen - der Druckstäbe einschließlich der Gleitschuhe (19', 21) so bemessen ist, daß sie den Lichtraum zwischen zwei benachbarten Steckhülsen (7, 7') nur mit Spiel (16) ausfüllen.

7. Wellengelenk nach Anspruch 6,
**dadurch gekennzeichnet,**
**daß** das Spiel (16) der Druckstäbe (15) zwischen zwei benachbarten Steckhülsen (7) so groß bemessen ist, daß sie bei Drehmomentbelastung des Wellengelenkes (1) sich kraftübertragend erst dann in den Grund der Umfangsrillen (11) bzw. der Oberfläche des Umfangswulstes der Steckhülsen (7) anlegen, wenn die Mitnahmeschlingen (8) durch die Drehmomentbelastung bereits bis zu einer bestimmten Umfangskraft belastet und in Umfangsrichtung elastisch gedehnt sind.

## Claims

1. Shaft link, that can, within certain limits, move axially and/or through an angle, for connecting two shafts (2) to each other, with
- flanges (3) with several, preferably three, locking pins (4) projecting axially in the direction of the shaft link, on the ends of both shafts (2) connected by the link, whereby all of the total of preferably six locking pins (4) disposed on either side of gaps are disposed equally distributed around the periphery of a common, divided circle (5),
- and with a flexible, regularly polygonal, preferably hexagonal, link collar (6), connecting, rigid against torsion, the locking pins (4) together, and provided, in the comer points, with pin bushings (7, 7'), the link collar (6) being axially, elastically deformable between the pin bushings (7, 7'),
- whereby the link collar (6) itself is formed, by several parts, as a rim of several continuous, oval, carrier loops that in each case enclose two adjacent pin bushings (7, 7') and that are in each case able to swivel radially on the pin bushings (7, 7'), such that the link collar (6) can flexibly vary in its form,
**characterized in that**
a straight strut (15), that is directly provided on its two end faces with at least support faces adapted to the pin bushings (7, 7'), is attached inside each of the oval carrier loops.

2. Shaft link in accordance with claim 1,
**characterized in that**
the struts (15, 15') are not only centred, form-locking, directly on the pin bushings (7, 7'), in a peripheral direction but also in an axial direction, that is, they are secured against slipping away axially and peripherally in spite of relative sliding movement in both directions.

3. Shaft link in accordance with claim 1,
**characterized in that**
shoes (19', 21), made of a material that can slide, particularly plastic, are placed on the straight and right-angled ends, of the struts (15'), that are cut to specific lengths, the said shoes together forming the functional lengths of the struts (15').

4. Shaft link in accordance with claim 1,
**characterized in that**
the struts (15) are made of plastic reinforced by long-fibres, whereby the long fibres all run, without interruption, parallel to each other and to the longitudinal axis of the struts (15).

5. Shaft link in accordance with claim 1,
**characterized in that**
particles of a solid lubricant are mixed in with the material of the struts (15) particularly into their fibre material and/or into the matrix material or into the material the shoes are made of.

6. Shaft link in accordance with claim 1,
**characterized in that**
the effective length (L) of the struts (15) alone or, in the case of there being shoes on end faces, of the struts plus the shoe (19', 21), is of a size whereby they only fill the space between two adjacent pin bushings (7, 7') with play (16) being left.

7. Shaft link in accordance with claim 6,
**characterized in that**
the play (16) of the struts (15) between two adjacent pin bushings (7) is of an extent whereby, with loading of the shaft link (1) with a transmitted torque, adjacent pin bushings concerned only lie in the base of the peripheral grooves (11) or on the surface of the peripheral beading of the pin bushings (7) if the carrier loops (8) are already loaded up to the point of a certain peripheral force by the torque loading and are elastically extended in the peripheral direction.

## Revendications

1. Joint universel pour l'assemblage de deux arbres (2), l'un avec l'autre, cet assemblage étant rigide à la torsion mais mobile axialement et/ou de façon angulaire, à l'intérieur de certaines limites, comprenant :
- une bride (3) disposée respectivement au niveau des extrémités des deux arbres (2) assemblés par le joint et comprenant plusieurs tourillons d'entraînement (4), de préférence trois, dépassant axialement en direction du joint universel, où les tourillons d'entraînement (4) prévus en totalité, de préférence six, disposés de façon réciproque sur des parties creuses, sont disposés de manière uniforme sur la circonférence d'un cercle primitif (5) commun,
- une bague d'articulation flexible (6) reliant entre eux, de façon rigide en torsion, les tourillons d'entraînement (4), la bague d'articulation étant d'un type polygonal régulier, de préférence hexagonal, et dotée, dans les points d'angle, de douilles enfichables (7, 7'), bague d'articulation qui est en soi élastiquement déformable, dans le sens axial, entre les douilles enfichables (7, 7'),
où la bague d'articulation (6), quant à elle, est formée en plusieurs parties, par une couronne de plusieurs boucles d'entraînement ovales (8), en soi sans fin, entourant respectivement deux douilles enfichables voisines (7, 7'), boucles d'entraînement qui peuvent pivoter sur les douilles enfichables (7, 7'), respectivement dans le sens radial, de sorte que la bague d'articulation (6) peut être modifiée, dans sa forme, de manière articulée,
**caractérisé**
**en ce qu'**une barre droite (15) travaillant à la compression est fixée à chaque fois, à l'intérieur de la boucle d'entraînement ovale (8), laquelle barre travaillant à la compression est dotée, au moins indirectement, au niveau de ses deux extrémités frontales, d'une surface d'appui adaptée aux douilles enfichables (7, 7').

2. Joint universel selon la revendication 1, **caractérisé en ce que** les barres (15, 15') travaillant à la compression sont centrées par sûreté de forme sur les douilles enfichables (7, 7'), non seulement dans la direction circonférentielle mais aussi, au moins indirectement, dans la direction axiale, c'est-à-dire protégées contre un glissement excessif, axial et périphérique, malgré un mouvement coulissant relatif dans les deux directions.

3. Joint universel selon la revendication 1, **caractérisé en ce que** des patins de guidage (19', 21) sont fixés au niveau des extrémités des barres (15') travaillant à la compression, ces extrémités étant coupées de façon droite et perpendiculairement à une longueur définie, ces patins de guidage étant composés d'une matière permettant le glissement, en particulier d'une matière plastique, patins de guidage qui forment ensemble la longueur fonctionnelle des barres (15') travaillant à la compression.

4. Joint universel selon la revendication 1, **caractérisé en ce que** les barres (15) travaillant à la compression sont constituées d'une matière plastique renforcée par des fibres longues, où les fibres longues sont toutes parallèles entre elles et par rapport à l'axe longitudinal des barres (15) travaillant à la compression et s'étendent sans interruption.

5. Joint universel selon la revendication 1, **caractérisé en ce que** des particules d'un lubrifiant solide sont mélangées dans la matière des barres (15) travaillant à la compression, en particulier dans leur matière renforcée par des fibres et/ou dans la matière plastique moulée ou dans la matière des patins de guidage.

6. Joint universel selon la revendication 1, **caractérisé en ce que** la longueur utile (L) des barres (15) travaillant à la compression, seules, ou - dans le cas de patins de guidage fixés aux extrémités - des barres travaillant à la compression et, y compris, des patins de guidage (19', 21), est dimensionnée de manière telle, que les barres travaillant à la compression ne remplissent l'espace libre compris entre deux douilles enfichables voisines (7, 7') qu'en comportant du jeu (16).

7. Joint universel selon la revendication 6, **caractérisé en ce que** le jeu (16) des barres (15) travaillant à la compression, compris entre deux douilles enfichables voisines (7), est dimensionné de façon si importante, que les barres travaillant à la compression, lors de la contrainte du moment de torsion du joint universel (1), ne s'appuient, en transmettant une force, au fond des gorges circonférentielles (11) ou de la surface du renflement circonférentiel des douilles enfichables (7), que lorsque les boucles d'entraînement (8) sont, déjà sous l'effet de la contrainte du moment de torsion, chargées jusqu'à une certaine force circonférentielle et allongées élastiquement dans la direction circonférentielle.
